Europäisches Patentamt

(19) **European Patent Office**

**Office européen des brevets**

(11) Numéro de publication: **0 015 041**
**B1**

(12) **FASCICULE DE BREVET EUROPEEN**

(45) Date de publication du fascicule du brevet:
18.04.84

(51) Int. Cl.³: **H 04 B 7/26, H 04 Q 7/00**

(21) Numéro de dépôt: **80200151.1**

(22) Date de dépôt: **21.02.80**

(54) **Système pour télécommunications de type radio-mobile.**

(30) Priorité: **23.02.79 BE 193652**

(43) Date de publication de la demande:
**03.09.80 Bulletin 80/18**

(45) Mention de la délivrance du brevet:
**18.04.84 Bulletin 84/16**

(84) Etats contractants désignés:
**CH DE FR GB IT NL SE**

(56) Documents cités:
**BE - A - 874 400**
**FR - A - 2 311 458**
**FR - A - 2 338 611**
**US - A - 3 898 390**

**JOURNAL OF THE ASTA ELECTRONICS UNION, 1973, no. 1 Tokyo, JP JAMIESON et al.: "Introduction of 12,5 kHz Channel Spacing in VHF Land Mobile Services in New Zealand", pages 30-35**
**JOURNAL OF THE ASIA ELECTRONICS UNION, 1972, no. 4, Tokyo JP AKED et al.: "Land Mobile VHF Communication in New Zealand" pages 42-47**
**REVIEW OF THE ELECTRICAL COMMUNICATION LABORATORIES, vol. 25, nos 11-12, novembre-décembre 1977 Tokyo, JP, KAMATA et al.: "800 MHz Band Land Mobile Telephone Radio System" pages 1157-1171**

(73) Titulaire: **Chantrain, Xaveer, Rubenslei 36, B-2000 Antwerpen (BE)**

(72) Inventeur: **Chantrain, Xaveer, Rubenslei 36, B-2000 Antwerpen (BE)**

(74) Mandataire: **De Rycker, Rudolf, Ir. et al, Vereenigde Octrooibureaux Belgie S.A. Charlottalei 48, B-2018 Antwerpen (BE)**

### Système pour télécommunications de type radio-mobile

La présente invention concerne un système de télécommunications entre un poste mobile parmi une multiplicité de postes mobiles et un des postes d'une multiplicité de postes fixes, le poste mobile comprenant un émetteur-récepteur (X–R) agencé pour émettre et recevoir des messages dans deux canaux de transmission distincts choisis parmi un groupe de canaux de transmission, le poste fixe comprenant plusieurs émetteurs (XI à Xm) pouvant émettre des messages dans un sous-groupe de canaux d'émission associé à ce poste fixe et plusieurs récepteurs (RI à Rm) pouvant recevoir des messages dans un sous-groupe de canaux de réception associé à ce poste fixe, les canaux de ce sous-groupe d'émission étant distincts des canaux du sous-groupe de réception, ce sous-groupe d'émission et ce sous-groupe de réception, qui forment une paire associée au même poste fixe, étant contenus dans le groupe de canaux de transmission précité de l'émetteur-récepteur, les canaux du sous-groupe d'émission de la paire de sous-groupes associée à un poste fixe et les canaux du sous-groupe de réception de cette paire de sous-groupes étant sélectionnés pour que les produits d'intermodulation et en particulier au moins ceux de troisième ordre, entre ces canaux d'émission tombent entre ces canaux de réception.

De tels systèmes de télécommunication sont notamment utilisés pour permettre d'établir une liaison téléphonique à partir d'un poste mobile par l'intermédiaire d'un poste fixe ou point d'accès radio.

Les problèmes les plus fréquemment rencontrés dans ces genres de systèmes de télécommunication sont la nécessité de maintenir une séparation appropriée entre les canaux de transmission et de réception pour établir une liaison en duplex, aussi bien au poste mobile qu'aux postes fixes concernés par cette liaison, la concentration de plusieurs émetteurs dans chaque poste fixe, ce qui engendre des produits d'intermodulation qui peuvent interférer avec les récepteurs de ce poste fixe, et la nécessité d'une commande coordonnée pour déterminer les canaux d'émission et de réception servant à une liaison en duplex déterminée.

La plupart des systèmes de télécommunication connus, aussi bien pour des applications civiles que militaires, imposent des contraintes sévères à la situation des canaux (nombre limité de canaux dans des bandes de fréquences relativement étroites, décalage de fréquence fixe entre les canaux d'émission et de réception) ou l'utilisation de signaux avec des caractéristiques très particulières par exemple dans un système à multiplexage dans le temps.

Dans le système de l'Office Postal Néo-Zélandais, tel que publié dans «Journal of the Asia Electronics Union», 1972, No. 4, pages 42 à 47 et 1973, No. 1, pages 30 à 35, une région a été divisée en zones A et zones B qui comprennent chacun un poste fixe. A chaque poste fixe sont associés un sous-groupe d'émission et un sous-groupe de réception mais les paires de sous-groupes de tous les zones A sont identiques et les paires de sous-groupes de tous les zones B sont également identiques. Les canaux du système ne sont donc répartis qu'en deux paires de sous-groupes différentes.

En plus, les canaux de chaque sous-groupe sont adjacents et sont arrangés selon une grille de raies spectrales équidistantes. Le type de modulation utilisé a pour effet que la largeur de bande occupée par chaque canal est sensiblement plus petite que l'espacement spectral entre les canaux. Afin de résoudre le problème des produits d'intermodulation, l'ensemble des canaux d'un sous-groupe d'émission d'une paire de sous-groupes associée à un poste fixe est déplacé par rapport à l'ensemble des canaux du sous-groupe de réception de la même paire de telle manière que les produits d'intermodulation entre les canaux d'émission tombent dans les fenêtres spectrales inoccupées entre les canaux de réception.

L'ensemble des canaux du sous-groupe d'émission ou de réception de la paire de sous-groupes d'une zone A est également décalé par rapport à l'ensemble des canaux d'émission ou de réception de la paire de sous-groupes d'une zone B.

Il en résulte que le système permet une certaine récupération dans une zone B de canaux non utilisables dans une zone A mais cette récupération est très limitée. Ce système exige une distance entre les canaux qui est beaucoup plus grande que la largeur d'un canal pour éviter l'effet des produits d'intermodulation, ce qui limite le nombre de canaux utilisables.

En plus, à cause du décalage fixe entre les fréquences d'émission et les fréquences de réception, ce système est difficilement utilisable dans des applications militaires, où les canaux doivent de préférence être choisis dans une large plage de fréquences et être répartis à des intervalles irréguliers dans des bandes partagées avec une multitude d'autres utilisateurs.

Dans le système décrit dans US-A-3 898 390, les canaux alloués au système sont répartis sur différents postes fixes, les canaux associés à un poste fixe étant à leur tour répartis en un canal de contrôle et des canaux de communication. Chaque poste fixe émet, sous la supervision d'une unité centrale, continuellement un signal sur son canal de contrôle, canal qui est différent du canal de contrôle d'un poste fixe adjacent. Lorsqu'une station mobile désire établir une liaison, elle teste les canaux de contrôle et lorsqu'elle a trouvé le canal associé au poste fixe que selon l'unité centrale, elle doit utiliser, elle émet un appel sur ce canal. L'unité centrale alloue alors un canal de communication au poste mobile et syntonise à distance le poste mobile sur le canal.

Les postes fixes ne doivent non seulement être reliés à une unité centrale mais ils doivent posséder chacun leur propre canal de contrôle qui est distinct des canaux de communication et des canaux de contrôle des autres postes fixes. Les émissions dans ces canaux de contrôle sont utilisées comme des balises guidant le processus d'explorateur des canaux par les postes mobiles. Un tel système n'est pas acceptable, pour des applications militaires notamment.

La présente invention a pour but de concevoir un système de télécommunication éliminant les inconvénients susdits.

Dans ce but les canaux alloués au système sont répartis en plusieurs paires de sous-groupes dont au moins trois paires sont différentes, les paires étant chacune associée à un poste fixe de telle manière qu'il n'existe pas de poste fixe adjacent ayant des sous-groupes associés identiques, les canaux de chaque sous-groupe étant répartis sur l'ensemble de la plage de fréquences disponible, le décalage entre les canaux du sous-groupe d'émission d'une paire et les canaux du sous-groupe de réception de cette paire étant intentionnellement variable, au moins deux des canaux alloués au système étant cependant réservés à la transmission de messages de signalisation, ces canaux étant communs à tous les postes fixes, ces canaux accélérant le processus d'établissement de la liaison et la recherche par le poste mobile du sous-groupe correct du poste fixe à utiliser.

Suivant une forme de réalisation avantageuse de l'invention, dans un procédé d'échange de messages entre postes désirant établir une liaison, le processus d'exploration des canaux disponibles est réservé aux récepteurs à chaque extrémité, les émetteurs devant être capables d'une syntonisation nettement moins fréquente et donc moins rapide, chaque récepteur communiquant à l'émetteur au moyen d'un message de signalisation transmis sur un des canaux communs le canal dans lequel cet émetteur est invité à travailler.

Suivant un mode de réalisation particulièrement avantageux de l'invention, les messages de signalisation émis par les postes dans les canaux communs susdits sont des messages numériques comprenant chacun une première séquence de bits de synchronisation, une deuxième séquence de bits donnant l'indicatif du poste appelé, une troisième séquence de bits donnant l'indicatif du poste appelant, une quatrième séquence de bits indiquant le canal dans lequel le poste appelé est invité à répondre et une cinquième séquence de bits indiquant la phase en cours du processus d'établissement de liaison.

D'autres détails et particularités de l'invention ressortiront de la description ci-après, donnée à titre d'exemple non limitatif et en se référant aux dessins annexés.

La fig. 1 est un schéma synoptique d'une partie d'un poste mobile du système de télécommunication suivant l'invention.

La fig. 2 est un schéma synoptique d'une partie d'un poste fixe du système de télécommunication suivant l'invention.

La fig. 3 est un schéma synoptique d'une partie d'un émetteur du système de télécommunication suivant l'invention.

La fig. 4 est un schéma synoptique d'une partie d'un récepteur du système de télécommunication suivant l'invention.

On décrira ci-après le système de télécommunication suivant l'invention dans son application à la bande militaire 30–80 MHz, étant donné que le système suivant l'invention permet à un utilisateur militaire de masquer les signaux de transmission parmi une multitude d'autres signaux présentant les mêmes caractéristiques. L'application du système à d'autres plages de fréquences est évidemment possible et peut même entraîner certaines simplifications.

Suivant l'invention, le système prévoit d'établir des liaisons en duplex avec une modulation delta «FSK» à 16 K bits par seconde, étant donné que ceci est le signal standardisé pour les applications militaires. Les liaisons en duplex de fréquence procurent également le moyen le plus aisé pour maintenir les canaux occupés durant la liaison et permettent d'utiliser des modules radio standards. La bande 30–80 MHz est divisée en plusieurs sous-bandes. La sous-bande supérieure de 60 à 80 MHz est utilisée pour la transmission du poste fixe vers le poste mobile en mode normal. La sous-bande inférieure de 30 à 50 MHz est utilisée pour la transmission du poste mobile vers le poste fixe. La sous-bande de 50 à 60 MHz est une bande de garde déterminée en fonction de la sélectivité qui peut être obtenue de manière économique pour les filtres de bande.

Les bandes supérieure et inférieure peuvent être échangées pour des transmissions dites en mode inverse. Ceci est utilisé pour autoriser des transmissions directes de poste mobile à poste mobile, mais peut également être exploité pour doubler la capacité du système en prévoyant des postes fixes «inversés». Ainsi qu'on le comprendra, il doit toujours exister une distance minimale entre des postes fixes afin d'éviter des interférences mutuelles, mais des postes fixes «inversés» peuvent être installés à des emplacements intermédiaires.

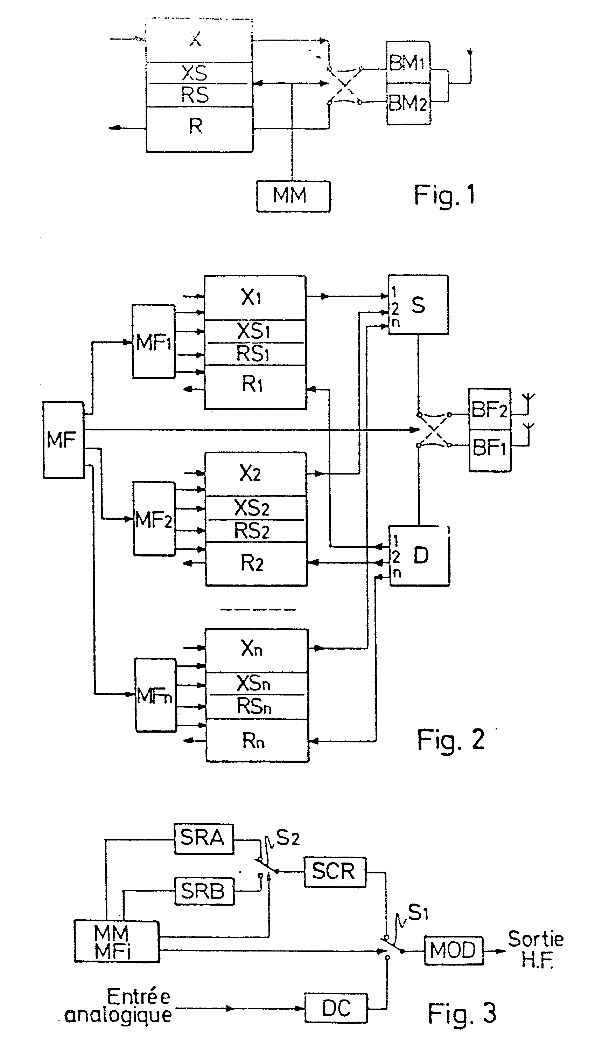

La fig. 1 représente la partie radio d'un poste mobile. X est un émetteur classique ayant par exemple une puissance de sortie d'environ 20 watts. R est un récepteur ayant par exemple une sensibilité d'entrée de − 110 dbm. Un synthétiseur de fréquence XS associé à l'émetteur X et un synthétiseur de fréquence RS associé au récepteur R sont utilisés pour permettre la sélection des canaux sous la commande d'un microprocesseur MM. Le temps de sélection d'un canal devrait être moins de 6 millisecondes. Les fonctions radio principales doivent pouvoir être commandées de manière numérique par le microprocesseur MM. Si l'on a obtenu une bonne suppression de la seconde harmonique, les étages de puissance de sortie peuvent être des étages à large bande non accordés ou des étages pouvant être accordés de manière lente. Ceci est important du point de vue économique étant donné qu'une syntonisation électronique rapide, à puissance élevée, est onéreuse et peut être une source de problèmes d'intermodulation. Un filtre de bande BM 1 pour la bande supérieure susdite et un filtre de bande BM 2 pour la bande inférieure susdite sont prévus entre la radio et l'antenne. Ces filtres peuvent être échangés pour le fonctionnement suivant le mode inverse. La commande de la radio par le microprocesseur MM n'est pas décrite mais est classique.

La fig. 2 illustre la structure d'un poste fixe. Un certain nombre de radios (entre 4 et 8 suivant des calculs d'optimisation de trafic) sont combinés dans ce poste fixe. Ces radios sont en principe identiques aux radios du poste mobile bien qu'une puissance de sortie moindre soit nécessaire. Les filtres de bandes BF1 et BF2 entre les radios et les antennes sont également identiques aux filtres de bandes du poste mobile et offrent une séparation d'environ 40 db. D est un amplificateur distributeur présentant de bonnes performances dynamiques, ainsi qu'une bonne linéarité et un faible facteur de bruit. Un choix logique pour cet amplificateur D est un amplificateur à transistor à effet de champ de moyenne puissance. S est un combinateur de puissance, causant de nombreux problèmes dans les systèmes classiques. Les sorties radio individuelles doivent être combinées par S pour obtenir une puissance de sortie de plusieurs Watts par canal sans interaction mutuelle qui est une source de produits d'intermodulation. X1, X2...Xn sont des émetteurs associés chacun à un synthétiseur de fréquence XS1, XS2...XSn et R1, R2...Rn sont des récepteurs associés chacun à un synthétiseur de fréquence RS1, RS2...RSn. On a également prévu des microprocesseurs MF1, MF2...MFn commandant ces synthétiseurs de fréquence ainsi que le fonctionnement des émetteurs-récepteurs individuels X1–R1, X2–R2...Xn–Rn. Un microprocesseur ou un réseau de microprocesseurs MF coordonne l'action des microprocesseurs MF1, MF2...MFn et permet également, en inversant les filtres BF1, BF2, de faire fonctionner ce poste fixe en mode inverse.

Il convient de remarquer qu'une différence d'environ 160 db est nécessaire entre la sortie de puissance des émetteurs et le niveau d'intermodulation de troisième ordre à l'entrée des récepteurs. Tous les systèmes connus obtiennent cette différence de 160 db soit en travaillant dans des bandes étroites et en filtrant les signaux, soit en séparant dans le temps ces signaux dans un système à duplexage dans le temps. Dans ce dernier cas, la séparation est théoriquement parfaite et dans le cas précédent on peut normalement obtenir 80 db par suppression d'intermodulation et 80 db par un filtrage ultérieur. Ces deux procédés pour éliminer les produits d'intermodulation de troisième ordre présentent évidemment des limitations sévères pour les applications militaires.

D'autre part, pour obtenir la meilleure protection possible à l'encontre d'interférences externes (intentionnelles ou non intentionnelles), il est désirable d'utiliser un nombre de canaux le plus élevé possible, mais d'autre part le cycle de recherche d'un canal libre peut être trop long si un nombre trop élevé de canaux doit être testé. Dans les systèmes connus, le choix des canaux est limité par la largeur de bande globale du système et par la séparation des canaux. Le nombre minimal des canaux n'est évidemment pas moindre que le nombre de radios (transmissions simultanées possibles) dans un poste fixe, mais il faut ajouter à ce nombre un facteur de sécurité pour les canaux brouillés par des interférences ou par une liaison sur un poste fixe adjacent qui peut être entendue et peut donc bloquer un canal. Ce problème est résolu dans les systèmes existants en dotant chaque poste fixe d'un sous-groupe différent de canaux. Il est alors généralement nécessaire que le poste mobile connaisse le poste fixe de sa zone et donc quel sous-groupe de canaux il doit utiliser.

Suivant l'invention, on a conçu un nouveau système de télécommunication avec des sous-groupes de canaux associés chacun à un poste fixe, ces sous-groupes de canaux étant définis d'une manière nouvelle et originale pour réduire au minimum les produits d'intermodulation de troisième ordre. Le système de télécommunication suivant l'invention peut utiliser tous les canaux dans les bandes 30–50 MHz et 60–80 MHz, ces canaux étant situés à des intervalles de 25 kHz, soit un total de 1600 canaux disponibles. Le nombre de canaux effectivement utilisés parmi ces 1600 canaux possibles est simplement limité par la capacité de mémoire des microprocesseurs MM et MF. Par suite de considérations topologiques, on peut estimer qu'il faut répartir les canaux effectivement utilisés suivant au minimum trois sous-groupes différents pour garantir qu'il n'existe pas de postes fixes adjacents ayant des sous-groupes associés identiques. Dans des cas particuliers, quatre sous-groupes différents peuvent être préférables.

Les produits d'intermodulation entre deux canaux de fréquence F1 et F2 sur lesquels émettent deux émetteurs d'un même poste fixe sont donnés par:

2F1–F2 et 2F2–F1. Par conséquent, les fréquences d'émission dans la bande 60–80 MHz peuvent engendrer des produits d'intermodulation de troisième ordre dans une bande s'étendant de 40 à 100 MHz. Dans le système militaire décrit à titre d'exemple, la moitié de la bande de réception des postes fixes (40–50 MHz) deviendrait inutilisable. Cependant, si dans un même poste fixe on n'utilise qu'un nombre limité de canaux (1 sous-groupe), il devient possible de définir les canaux d'émission de ce sous-groupe d'une manière telle que les produits d'intermodulation de troisième ordre engendrés par ces canaux d'émission n'interfèrent pas avec les canaux de réception associés au même poste.

Par exemple, si on choisit les fréquences des canaux d'émission du poste fixe à des multiples impairs de l'intervalle de fréquence de 25 kHz, on sait alors que les produits d'intermodulation de troisième ordre dans la bande de réception seront également situés à des multiples impairs de 25 kHz. En utilisant uniquement des canaux de réception ayant des fréquences égales à des multiples pairs de 25 kHz dans la partie supérieure de la bande de réception, les produits d'intermodulation de troisième ordre tomberont entre les canaux de réception et les filtres à fréquence intermédiaire des récepteurs du poste fixe contribueront à l'élimination de ces produits d'intermodulation de troisième ordre. Il est évidemment également possible de situer les canaux d'émission d'un autre sous-groupe à des fréquences qui sont des multiples pairs de l'intervalle de 25 kHz et les canaux de réception associés à cet autre sous-groupe à des fréquences qui sont des multiples impairs de cet intervalle. Plus généralement, on peut déterminer les fréquences des canaux d'émission et de réception du sous-groupe associés à un poste fixe de manière que les produits d'intermodulation de troisième ordre des canaux d'émission tombent entre les canaux de réception associés à ce même poste fixe. A cet effet, on peut par exemple utiliser un programme d'ordinateur pour vérifier les combinaisons de canaux d'émission et de réception du sous-groupe associé à un poste fixe afin que les produits d'intermodulation de troisième ordre ne tombent pas dans les canaux de réception.

Grâce à la situation suivant l'invention des canaux d'émission et de réception du sous-groupe associé à un poste fixe, il est suffisant d'obtenir 60 db de suppression d'intermodulation à l'émetteur, 40 db dans le filtre de bande et 70 à 80 db dans le filtre à fréquence intermédiaire des récepteurs du poste fixe. La suppression d'intermodulation est donc d'environ 170 à 180 db et est nettement supérieure aux 160 db nécessaires.

Grâce à la situation suivant l'invention des canaux du sous-groupe associé à un poste fixe, on peut répartir ces canaux sur une large plage de fréquences sans problèmes d'intermodulation et tout en conservant un nombre limité de canaux, ce qui facilite la recherche d'un canal libre pour établir une liaison.

Pour établir une liaison entre un poste mobile et un poste fixe, on a prévu que tous les postes fixes ont au moins deux canaux communs réservés à la transmission de messages de signalisation. Plus généralement, les postes fixes ont en commun une multiplicité de canaux réservés à la transmission de messages de signalisation.

Par conséquent, on a associé à chaque poste fixe deux sous-groupes de canaux d'émission et de réception comprenant des canaux spécifiques pour ce poste fixe, un certain nombre de canaux de réserve pour compenser les canaux qui seraient indisponibles par suite d'interférences ou de brouillages, et un certain nombre de canaux communs à tous les postes fixes qui sont utilisés pour transmettre des messages de signalisation lors de l'établissement d'une liaison.

Par exemple, un sous-groupe associé à un poste fixe typique peut comprendre 12 canaux spécifiques à ce poste fixe et 12 canaux communs. Par conséquent, le nombre total de canaux utilisés par un système de télécommunication avec trois sous-groupes serait de 48 canaux dans chaque sous-bande. Afin de réduire la probabilité d'interception et la vulnérabilité au brouillage de ces canaux, ils sont répartis sur l'ensemble de la plage de fréquences disponible. Cette large répartition contribue à la protection à l'encontre de certains phénomènes de propagation (multipath). En outre, suivant l'invention, les deux canaux utilisés pour une liaison en duplex sont sélectionnés individuellement et on n'a donc pas prévu, comme dans les systèmes suivant la technique antérieure, une différence de fréquence constante entre les canaux d'émission et de réception d'une liaison duplex.

Pour établir une liaison, en sélectionnant de manière individuelle les canaux d'émission et de réception, une procédure particulière d'établissement de liaison est nécessaire. Cette procédure est réalisée grâce à l'échange de messages de signalisation entre le poste fixe et le poste mobile sur les canaux communs susdits. La sélection des canaux pour une liaison en duplex est réalisée de telle sorte que le choix d'un canal est déterminé par la qualité de réception des messages passant par ce canal.

Les messages de signalisation émis dans les canaux communs susdits sont constitués par des messages numériques comprenant au moins 5 séquences de bits, une première séquence de bits SF1 servant à la synchronisation, une deuxième séquence de bits SF2 donnant l'indicatif du poste appelé et comprenant des bits de contrôle pour la détection d'erreurs éventuelles, une troisième séquence de bits SF3 donnant l'indicatif du poste appelant et comprenant des bits de contrôle pour la détection d'erreurs éventuelles, une quatrième séquence de bits SF4–CHA indiquant le canal sur lequel l'autre poste est invité à répondre, et une cinquième séquence de bits SF4–STA indiquant la phase en cours du processus d'établissement de liaisons, ces séquences SF4–CHA et SF4–STA comprenant également des bits de contrôle pour la détection d'erreurs éventuelles.

Une caractéristique essentielle du système suivant l'invention est que les différentes séquences de bits sont protégées individuellement à l'encontre d'erreurs éventuelles, de manière à permettre un taux d'erreur relativement élevé (entre 1 et 10%). De cette manière, la probabilité de recevoir un message de signalisation correct est nettement plus élevée et il n'est donc pas nécessaire de répéter un nombre trop élevé de fois le message de signalisation complet. La détection d'erreurs éventuelles est réalisée de manière classique par les microprocesseurs MM et MF.

On peut également prévoir une sixième séquence de bits pour réduire la probabilité d'une réponse simultanée et donc d'interférences lorsque deux ou plusieurs postes fixes répondent à un appel général d'un poste mobile. Un poste fixe ne peut dans ce cas répondre à un tel appel général que lorsque la sixième séquence de bits est identique à une séquence de bits associée à ce poste fixe. On décrit ci-après la procédure d'établissement suivant l'invention d'une liaison en duplex dans un cas où un poste mobile désire établir une liaison avec un poste fixe dont il ne connaît pas l'indicatif. Dans les autres cas, la situation est plus simple et certaines phases de la procédure peuvent être omises.

Au départ, aussi bien le poste mobile que le poste fixe testent, à l'aide de leurs récepteurs, les canaux communs afin de détecter un éventuel appel sélectif ou général. Afin d'augmenter la probabilité de découvrir un tel appel, la recherche par les récepteurs du poste mobile et des postes fixes est rendue aléatoire. Avec un périodicité moindre, ces récepteurs testent également les canaux normaux si tous les canaux communs sont occupés ou bloqués.

Lorsqu'il désire établir une liaison, le poste mobile commence par se placer en mode inverse et cherche, à l'aide de son récepteur, un canal commun libre dans sa bande de transmission. Lorsqu'il a découvert un canal A, il revient au mode normal, règle son émetteur sur ce canal A et commence à émettre de manière continue le message de signalisation susdit ayant le contenu suivant: SF1 est la séquence de synchronisation, SF2 est un code pour un appel général à moins que l'écoute d'autres communications ait permis de déterminer l'identité du poste fixe de la zone, SF3 est son propre indicatif, SF4–CHA est initialement un code sans signification, SF4-STA indique initialement la première phase de la procédure d'établissement de liaison. Simultanément, le récepteur du poste mobile recherche un canal de réception commun libre. Lorsqu'il a trouvé un canal B, le poste mobile place l'indicatif de B dans SF4–CHA et le récepteur est accordé sur le canal B. Au poste fixe, un ou plusieurs récepteurs testent les canaux et le premier récepteur détectant un appel général ou un appel particulier pour son poste fixe se règle sur ce canal et informe le microprocesseur MF de ce fait. Le microprocesseur empêche alors les autres récepteurs de répondre au même appel. Il convient de remarquer que tous les messages de signalisation pour l'établissement d'une liaison passent par les canaux communs et qu'aucun trafic normal n'est transmis sur ces derniers. L'émetteur du poste fixe est alors accordé sur le canal B s'il est autorisé par le microprocesseur (il est possible que B soit déjà utilisé dans le poste fixe mais n'ait pas été entendu par le poste mobile appelant). L'émetteur du poste fixe émet alors le message de signalisation suivant: SF1 est le code de synchronisation, SF2 contient l'indicatif du poste mobile, SF3 contient l'indicatif du poste fixe, SF4–CHA indique un canal C disponible parmi les canaux de réception du poste fixe, ce canal C étant sélectionné par le poste fixe dans son sous-groupe de réception associé, et SF4-STA indique la première phase du processus d'établissement de liaison. Le poste mobile appelant reçoit ce message en retour avec son propre indicatif en SF2 à partir d'un poste fixe (ou exceptionnellement à partir de plusieurs postes fixes). Si cette réponse est reçue de manière correcte et avec une qualité acceptable (à partir du meilleur poste fixe), le poste mobile règle son émetteur sur le canal C suggéré et remplace le code d'appel général dans SF2 par l'indicatif du poste fixe. Les autres postes fixes stoppent alors leurs émissions. Le poste mobile recherche à ce moment un bon canal spécifique de réception dans le même sous-groupe d'émission associé à ce poste fixe. Lorsqu'il a découvert un tel canal D, l'indication de ce canal D est placée dans SF4–CHA et SF4-STA indique la phase 2. Il existe une petite chance que D soit déjà occupé dans le poste fixe sans que le poste mobile s'en soit aperçu. Le microprocesseur du poste fixe ne permet alors pas à l'émetteur de se régler sur D. Cet émetteur reste au contraire sur B et émet éventuellement un code de réjection dans SF4-STA. Après un certain temps, le poste mobile n'ayant pas reçu de réponse sur le canal D, revient au canal B. Le poste mobile sait alors qu'il doit proposer un autre canal jusqu'à ce que ce canal soit accepté par le poste fixe. Si le poste fixe accepte le canal D, il commence à transmettre sur D et indique la deuxième phase dans SF4-STA. Avec les deux postes en deuxième phase, nous pouvons conclure que la liaison radio est établie sur des canaux normaux garantissant une qualité optimale à chacune des deux extrémités de réception de la liaison.

Un aspect important de la procédure d'établissement de liaisons ci-dessus est que la vitesse de syntonisation des émetteurs peut être faible parce que ces émetteurs doivent être réglés de manière moins fréquente que les récepteurs. Ceci est un avantage économique important étant donné qu'une syntonisation électronique rapide de circuits à haute puissance est onéreuse.

Après la deuxième phase, l'établissement de la liaison radio étant terminé, la liaison téléphonique peut s'établir d'une manière classique sur les canaux normaux acceptés par le poste mobile et le poste fixe.

On décrit ci-après, à titre d'exemple, la structure et le fonctionnement des moyens permettant d'exploiter les messages de signalisation indiqués ci-dessus. On se référera au cas d'une modulation delta – FSK pour les messages d'information et on supposera, à titre non limitatif, que la première séquence de synchronisation comprend 16 bits 1, que la deuxième séquence susdite comprend 16 bits, que la troisième séquence susdite comprend 16 bits et que les cinquième et sixième séquences susdites comprennent ensemble 16 bits.

On a illustré sur la fig. 3 la structure d'un émetteur suivant l'invention pouvant être utilisé aussi bien dans un poste mobile que dans un poste fixe. Cet émetteur comprend des registres SRA et SRB d'une capacité de 16 bits chacun, un codeur SCR réalisé de manière classique pour produire, à partir du contenu de SRA ou de SRB des séquences pseudo-aléatoires correspondant au contenu codé des registres SRA ou SRB, un codeur delta DC recevant à son entrée le signal d'information à transmettre et un étage de modulation FSK MOD. Les sorties de SCR et de DC sont connectées au modulateur MOD par l'intermédiaire d'un premier commutateur S1 commandé par le microprocesseur MM ou MFi. Les sorties des registres SRA et SRB sont reliées à l'entrée du codeur SCR par l'intermédiaire d'un second commutateur S2 également commandé par le microprocesseur MM ou MFi. Initialement, les commutateurs S1 et S2 se trouvent dans les positions représentées sur la fig. 3 et la séquence de synchronisation est produite en ramenant SCR à l'état 0 et en introduisant dans SRA 16 bits 1. Après 16 impulsions d'horloge, la transmission de la séquence de synchronisation pseudo-aléatoire est terminée et le commutateur S2 change de position pour relier SRB au codeur SCR, le contenu de la deuxième séquence SF2 étant mémorisé dans SRB et transmis. Le commutateur retourne ensuite à la position illustrée sur la fig. 3 et on transmet la troisième séquence SF3 qui a été introduite dans SRA, le commutateur S2 étant ensuite déplacé pour relier SRB à SCR pour transmettre la cinquième et la sixième séquence de bit. Ce processus se répète jusqu'à ce que l'on parvienne à la troisième phase de la procédure d'établissement de liaison après laquelle S1 est déplacée pour relier au modulateur la source d'information constituée par le codeur delta DC éventuellement par l'intermédiaire d'un codeur de cryptage. On transmet ensuite périodiquement une brève salve de signalisation au cours de la transmission des messages d'information d'une manière décrite plus en détail ci-après.

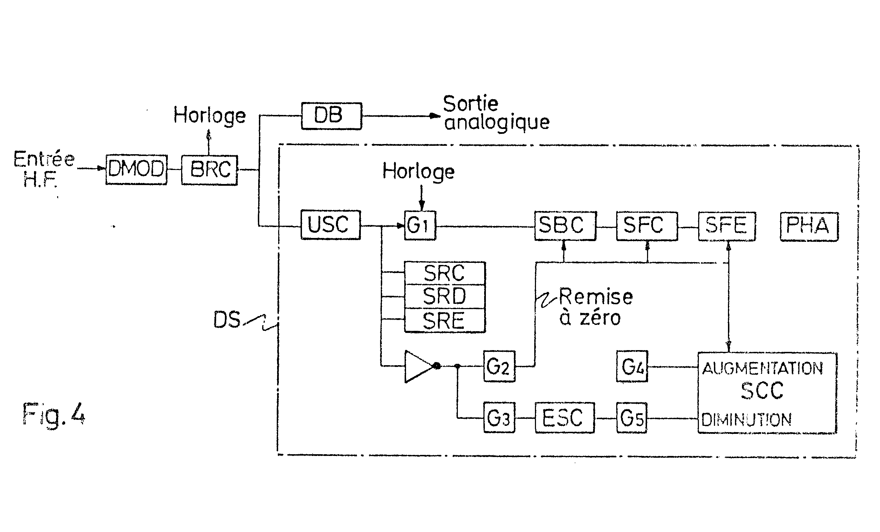

On a représenté sur la fig. 4 un récepteur suivant l'invention pouvant être utilisé aussi bien dans un poste fixe que dans un poste mobile. Ce récepteur comprend un démodulateur FSK DMOD, un décodeur delta DD relié à la sortie du démodulateur, le cas échéant par l'intermédiaire d'un décrypteur, et un décodeur de signalisation DS. La sortie du démodulateur DMOD est utilisée en BRC (régénérateur de bits d'horloge) pour produire d'une manière classique les impulsions d'horloge nécessaires. La sortie de BRC est toujours connectée aussi bien au décodeur delta DD qu'au décodeur de signalisation DS. Les bits de signalisation, reçus et régénérés, passent par un décodeur de signalisation USC exécutant l'opération complémentaire à celle de SCR. Ceci signifie que la sortie USC sera une séquence de 16 bits 1 uniquement si une séquence de synchronisation a été transmise de manière parfaitement correcte. Il est théoriquement possible que durant la transmission d'information normale, on reçoive une séquence identique à la version codée de la séquence de synchronisation, mais la probabilité d'un tel évènement est extrêmement faible et ce cas sera traité par le système à peu près comme une erreur de synchronisation occasionnelle.

SBC est un compteur à 4 bits comptant des impulsions d'horloge aussi longtemps que la sortie USC est à 1. Chaque fois que cette sortie est 0, SBC (et SFC) est remis à 0. Ce n'est que si on reçoit 16 bits 1 consécutifs que SBC peut atteindre l'état 1-1-1-1 et que le compteur de séquence SFC peut passer de l'état 0-0 à l'état 0-1 indiquant que le décodeur de signalisation DS est prêt à recevoir la seconde séquence (SF2).

A ce moment, la porte G1 reste ouverte quelle que soit la sortie de USC. La sortie de USC sera alors normalement constituée par la séquence SF2 de 16 bits qui est introduite dans un registre SRC pour être lue par le microprocesseur associé. Les données ne sont cependant pas encore considérées comme valables. Après 16 bits, SBC se trouve à nouveau dans l'état 1-1-1-1 et SFC passe à l'état 1-0 indiquant la réception de la troisième séquence SF3. Les données de SF3 sont introduites dans un registre SRD et lues par le microprocesseur. La réception des cinquième et sixième séquences de bits SF4–CHA et SF4–STA se produit d'une manière analogue et ces séquences sont introduites dans un registre SRE. Il convient de remarquer qu'un seul registre à décalage serait suffisant pour introduire les séquences susdites si le microprocesseur lisait le contenu de ce registre au cours d'une seule période de bit.

A la fin de la réception des cinquième et sixième séquences de bits, le compteur SFC revient à l'état 0-0 et règle une bascule bi-stable SFE sur 1. Si la séquence reçue ensuite est à nouveau une séquence de synchronisation, le décodeur de signalisation se trouvera dans un état dans lequel SBC = 1-1-1-1, SFC = 0-0 et SFE = 1 et cette situation sera interprétée comme une acquisition correcte de la synchronisation et un compteur de performances SCC quittera l'état 0, ce qui signifie pour le microprocesseur associé que les données, lues préalablement à partir des registres à décalage SRC, SRD et SRE sont valables pour autant que le contrôle de parité soit également valable. En même temps, avec SCC dans un état différent de 0 et aussi longtemps que la procédure d'établissement de liaison reste dans la première ou la deuxième phase, la porte G1 reste ouverte, la porte G2 bloquée et la porte G3 ouverte. Ceci a pour résultat qui si des erreurs sont reçues pendant une séquence de synchronisation, le système ne revient pas immédiatement à l'état 0 mais au contraire compte ces erreurs par l'intermédiaire de la porte G3 dans le compteur d'erreurs ESC.

SCC est un compteur bidirectionnel qui augmente son contenu d'une unité chaque fois qu'une séquence de synchronisation est reçue correctement jusqu'à atteindre une valeur maximale égale par exemple à 8 (c'est-à-dire l'état 1.1.1).

Le contenu de SCC est diminué d'une unité chaque fois que l'on détecte n erreurs dans la séquence de synchronisation. Par suite de l'effet d'extension des erreurs au cours des opérations de codage-décodage pseudo-aléatoire, on a prévu qu'au moins quatre erreurs doivent être comptées dans ESC avant de diminuer d'une unité le contenu de SCC. On peut également prévoir que le nombre n d'erreurs à compter par le compteur ESC avant de diminuer d'une unité SCC dépend de l'état de SCC. Grâce à cette particularité de l'invention, la synchronisation à la réception des messages de signalisation est extrêmement souple et la réception de quelques erreurs seulement n'entraînera pas immédiatement un déverrouillage du système. Lorsque le système perd effectivement sa synchronisation, on reçoit tellement d'erreurs que SCC revient rapidement à 0 et qu'un nouveau processus de synchronisation débute.

Il convient de remarquer que des erreurs dans les deuxième, troisième, quatrième, cinquième et sixième séquences sont négligées par le décodeur de signalisation. Ces séquences sont protégées individuellement par un contrôle de parité ou par un autre système de codage et elles sont interprétées par le microprocesseur associé.

Le fonctionnement du système est légèrement différent durant les troisième et quatrième phases de la procédure d'établissement de liaison, pendant lesquelles des messages de signalisation sont transmis de manière intermittente selon la succession suivante: SF1, SF2, SF3, SF4, SF1, c'est-à-dire que l'on transmet les deuxième, troisième et quatrième séquences précédées et suivies par une séquence de synchronisation. La sortie d'une bascule bi-stable PHA se trouve dans l'état 1 pendant les première et deuxième phases de la procédure d'établissement de liaison et dans l'état 0 pendant les troisième et quatrième phases de cette procédure. Avec la sortie de PHA à l'état 0, la porte G2 ramène à l'état 0 SBC, SFC et SFE, SCC. Le système G1, SBC, SFE SFC se trouve alors exactement dans le même état qu'au début de la procédure de synchronisation. Comme décrit ci-dessus, SCC atteindra un état différent de 0 lorsque deux séquences de synchronisation correctes auront été reçues consécutivement, ce qui indique que les données dans les registres SRC, SRD et SRE sont valables. Mais dans ce cas, le processus s'arrête après la seconde séquence de synchronisation parce que G2 fournit une impulsion de remise à 0 lorsque SFC se trouve dans l'état 0–1, SFE dans l'état 1 et PHA dans l'état 0. Le système attend alors le message de signalisation suivant.

La logique détaillée utilisée dépend du matériel logique sélectionné. De plus, certaines des fonctions indiquées peuvent être réalisées par un microprocesseur associé au récepteur plutôt que par une logique spécialisée du décodeur de signalisation. Pour des raisons de clarté, l'interface avec le microprocesseur associé n'a pas été représentée parce qu'elle est classique. Au lieu d'indiquer le câblage réel des éléments du décodeur de signalisation, on a préféré indiquer ci-après les fonctions logiques des différents éléments en adoptant les conventions classiques. L'état des compteurs est représenté par les bits les plus significatifs à partir de la gauche. G1 est ouverte si (SFC=00) (USC = 1 + (SFC ≠ 00) + (SCC ≠ 000),

G2 est ouverte si (SFC=00) (SCC=000) + (SFC =01)
(SFE=1) (PHA=0),

G3 est ouverte si (SFC=00) (SCC≠000),

G4 est ouverte si (SBC=1111) (SFC=00)
(SFE=1) (SCC≠111)

G5 est ouverte si (SFC=00) (sortie ESC=1)

Grâce à la structure de l'émetteur réalisé suivant l'invention, on a obtenu que le décodeur delta et le décodeur de signalisation puissent être tous deux reliés en permanence à la sortie de BRC.

Il convient également de remarquer que durant les troisième et quatrième phases, la transmission continue du message de signalisation est interrompue et elle est remplacée par de brèves salves de signalisation transmises une ou deux fois par seconde. Ces salves de signalisation sont constituées, comme indiqué, par les deuxième, troisième, quatrièmeséquences susdites précédées et suivies d'une séquence de synchronisation. Ceci n'interfère pas excessivement avec les messages d'information, ce qui fait qu'on a pu laisser en parallèle le décodeur de signalisation DS et le décodeur delta DD à la sortie de DRC. En effet, un message de signalisation de 5 × 16 bits toutes les 0,5 ou 1 seconde correspond à un taux d'erreurs de moins de 1%, ce qui est acceptable pour un décodeur delta. L'influence sur le décodeur delta est encore réduite parce que la probabilité des 1 et des 0 dans la salve de signalisation est pratiquement égale par suite de l'action du codage pseudo-aléatoire.

En outre, on a également réalisé, suivant l'invention, un décodeur de signalisation qui permet d'accepter un taux d'erreurs relativement élevé (entre 1 et 10%), grâce aux compteurs ESC et SCC, ce qui confère une souplesse particulièrement intéressante à ce décodeur de signalisation. Il n'est ainsi pas nécessaire de reprendre la procédure de synchronisation chaque fois que l'on reçoit une séquence de synchronisation incorrecte.

**Revendications**

1. Système de télécommunication entre un poste mobile parmi une multiplicité de postes mobiles et un des postes d'une multiplicité de postes fixes, le poste mobile comprenant un émetteur-récepteur (X–R) agencé pour émettre et recevoir des messages dans deux canaux de transmission distincts choisis parmi un groupe de canaux de transmission, le poste fixe comprenant plusieurs émetteurs (X1 à Xm) pouvant émettre des messages dans un sous-groupe de canaux d'émission associé à ce poste fixe et plusieurs récepteurs (R1 à Rm) pouvant recevoir des messages dans un sous-groupe de canaux de réception associé à ce poste fixe, les canaux de ce sous-groupe d'émission étant distincts des canaux du sous-groupe de réception, ce sous-groupe d'émission et ce sous-groupe de réception, qui forment une paire associée au même poste fixe, étant contenus dans le groupe de canaux de transmission précité de l'émetteur-récepteur, les canaux du sous-groupe d'émission de la paire de sous-groupes associée à un poste fixe et les canaux du sous-groupe de réception de cette paire de sous-groupes étant sélectionnés pour que des produits d'intermodulation et en particulier au moins ceux de troisième ordre, entre ces canaux d'émission tombent entre ces canaux de réception, caractérisé en ce que les canaux alloués au système sont répartis en plusieurs paires de sous-groupes dont au moins trois paires sont différentes, les paires étant chacune associée à un poste fixe de telle manière qu'il n'existe pas de postes fixes adjacents ayant des sous-groupes associés identiques, les canaux de chaque sous-groupe étant répartis sur l'ensemble de la plage de fréquences disponible, le décalage entre les canaux du sous-groupe d'émission d'une paire et les canaux du sous-groupe de réception de cette paire étant intentionnellement variable, au moins deux des canaux alloués au système étant cependant réservés à la transmission de messages de signalisation, ces canaux étant communs à tous les postes fixes, ces canaux accélérant le processus d'établissement de la liaison et la recherche par le poste mobile du sous-groupe correct du poste fixe à utiliser.

2. Système de télécommunication suivant la revendication 1, caractérisé en ce que dans un procédé d'échange de messages entre postes désirant établir une liaison, le processus d'exploration des canaux disponibles est réservé aux récepteurs à chaque extrémité, les émetteurs devant être capables d'une syntonisation nettement moins fréquente et donc moins rapide, chaque récepteur communiquant à l'émetteur au moyen d'un message de signalisation transmis sur un des canaux communs le canal dans lequel cet émetteur est invité à travailler.

3. Système de télécommunication suivant la revendication 2, caractérisé en ce que les messages de signalisation comprennent chacun une première séquence de bits de synchronisation, deux séquences de bits donnant l'indicatif du poste appelant, resp. poste appelé, une séquence de bits indiquant le canal dans lequel le poste appelé est invité à répondre et une séquence de bits réservée à plusieurs fonctions de télécontrôle et de télécommande adaptées aux besoins d'une application particulière éventuelle du système.

4. Système de télécommunication suivant la revendication 3, caractérisé en ce que le décodeur de signalisation (DS) est agencé pour compter le nombre de séquences de synchronisation reçues correctement à partir de la deuxième séquence de synchronisation reçue correctement et pour diminuer d'une unité la valeur ainsi comptée chaque fois que l'on détecte n erreurs dans une séquence de synchronisation reçue de manière incorrecte

## Claims

1. Telecommunication system between one mobile station among a plurality of mobile stations and the one station among a plurality of fixed stations, the mobile station comprising a transceiver (X–R) so arranged as to send and receive messages in two discrete transmission channels selected from a transmission channel group, the fixed station comprising a plurality of transmitters ($X_1$ to $X_m$) able to send messages in a sending channel sub-group associated with said fixed station, and a plurality of receivers ($R_1$ to $R_m$) able to receive messages in a receiving channel sub-group associated with said fixed station, the channels of said sending sub-group being separate from the channels of said receiving sub-group, said sending sub-group and said receiving sub-group which form a pair associated with the same fixed station, being contained in said transmission channel group of the transceiver, the sending sub-group channels of the sub-group pair associated with a fixed station, and the receiving sub-group channels of said sub-group pair being so selected as to have intermodulation products and particularly at least the third-order products, fall between said receiving channels, characterized in that the channels allocated to the system are distributed into a plurality of pairs of sub-groups, three pairs of which at least are different, the pairs being each associated to a fixed station in such a way that there are no adjacent fixed stations having identical associated sub-groups, the channels in each sub-group being distributed over the whole range of available frequencies, the staggering between the channels of the sending sub-group of the one pair and the channels of the receiving sub-group of said pair being voluntarily varying, at least two of those channels allocated to the system being however set aside for the transmission of signalling messages, said channels being common to all of the fixed stations, said channels speeding-up the link setting-up process and the search by the mobile station of the proper sub-group of the fixed station to be used.

2. Telecommunication system according to claim 1, in which in a method for exchanging messages between stations wishing to set-up a link, the scanning process for the free channels is reserved to the receivers at each end, the transmitters having to be tunable substantially less frequently and thus less rapidly, each receiver conveying to the transmitter through a signalling message sent over one of the common channels, the channel in which said transmitter is requested to operate.

3. Telecommunication system according to claim 2, in which the signalling messages each comprise a first synchronizing bit sequence, two bit sequences giving the call-sign of the calling station, respectively the called station, a bit sequence giving the channel in which the called station is requested to answer, and a bit sequence reserved for a plurality of telemonitoring and telecontrol functions adapted to the needs of a possible particular application of the system.

4. Telecommunication system according to claim 3, in which the signalling decoder (DS) is so arranged as to count the number of synchronizing sequences being received correctly from the second correctly-received synchronizing sequence, and to decrease by one unit the resulting count each time n errors have been sensed in an uncorrectly-received synchronizing sequence.

## Patentansprüche

1. Telekommunikationssystem zwischen einem beweglichen Posten einer Menge beweglicher Posten und einem Festposten einer Festpostenmenge, wobei der bewegliche Posten mit einem Sende-Empfanggerät (X–R) für das Senden und Empfangen von Nachrichten in zwei verschiedenen, aus einer Übertragungskanalgruppe gewählten Übertragungskanälen versehen ist; der Festposten mit mehreren Sendern $(X_1$ bis $X_m)$ für das Senden von Nachrichten in einer diesem Festposten zugeordneten Sendekanal-Untergruppe sowie mit mehreren Empfängern $(R_1$ bis $R_m)$ für das Empfangen von Nachrichten in einer diesem Festposten zugeordneten Empfangkanal-Untergruppe ausgestattet ist; die Kanäle dieser Sende-Untergruppe sich von den Kanälen der Empfang-Untergruppe unterscheiden; diese ein, einem und demselben Festposten zugeordnetes Paar bildenden Sende-Untergruppe und Empfang-Untergruppe in der vorgenannten Übertragungskanalgruppe des Sende-Empfanggeräts enthalten sind; und die Kanäle der Sende-Untergruppe des einem Festposten zugeordneten Untergruppenpaares und die Kanäle der Empfang-Untergruppe dieses Untergruppenpaares derart gewählt sind, dass Zwischenmodulationsprodukte und zwar insbesondere wenigstens diejenigen dritter Ordnung zwischen den Sendekanälen, zwischen diesen Empfangkanälen liegen, dadurch gekennzeichnet, dass die dem System zugeteilten Kanäle in mehreren Untergruppenpaaren eingeteilt sind, wovon wenigstens drei Paare verschieden sind, und jedes Paar derart einem Posten zugeordnet ist, dass es keine benachbarten Posten mit identischen einander zugeordneten Untergruppen gibt; die Kanäle einer jeden Untergruppe über den Gesamtbereich des zur Verfügung stehenden Frequenzgebietes verteilt sind; die Verschiebung zwischen den Kanälen der Sende-Untergruppe eines Paares und den Kanälen der Empfang-Untergruppe dieses Paares absichtlicherweise veränderlich ist; aber wenigstens zwei der dem System zugeteilten Kanäle für die Übertragung von Meldezeichen vorbehalten sind, wobei diese Kanäle für sämtliche Festposten gemeinschaftlich sind und diese Kanäle den Verlauf des Zustandekommens der Verbindung und das Suchen durch den beweglichen Posten der richtigen Untergruppe des anzuwendenden Festposten beschleunigen.

2. Telekommunikationssystem gemäss dem Anspruch 1, dadurch gekennzeichnet, dass in einem Auswechselverfahren von Nachrichten zwischen Posten die wünschen eine Verbindung zustandezubringen, den Verlauf des Abtastens der zur Verfügung stehenden Kanäle Aufgabe des an jedem Ende befindlichen Empfängers ist, wobei die Sender sich für eine Abstimmung bedeutend geringerer Häufigkeit und also geringerer Geschwindigkeit eignen müssen und jeder Empfänger mittels eines über einen gemeinschaftlichen Kanal übertragenen Zeichens dem Sender den für die Wirkung desselben bestimmten Kanal meldet.

3. Telekommunikationssystem gemäss dem Anspruch 2, dadurch gekennzeichnet, dass jedes Meldezeichen aus einer ersten Synchronisierungsbits-Folge, zwei das Kennzeichen des anrufenden Postens bzw. des rufenden Postens mitteilenden Bitsfolgen, einer den Kanal für die Antwort des angerufenen Postens mitteilenden Bitsfolge und einer Bitsfolge für mehrere Fernmelde- und Fernsteuerungen in Bezug auf irgendeine Sonderanwendung des Systems besteht.

4. Telekommunikationssystem gemäss dem Anspruch 3, dadurch gekennzeichnet, dass der Fernmeldungsentschlüssler (DS) für das Zählen der Anzahl ab der zweiten korrekt empfangenen Synchronisierfolge korrekt empfangenen Synchronisierfolgen und für das Vermindern der derart erhaltenen Zahl um eine Einheit bei jeder Feststellung von n Fehlern in einer fehlerhaft empfangenen Synchronisierfolge eingerichtet ist.

Fig. 1

Fig. 2

Entrée
analogique

Sortie
H.F.

Fig. 3

Fig. 4